# EUROPÄISCHE PATENTSCHRIFT

(11) **EP 4 434 769 B1**
(45) Veröffentlichungstag und Bekanntmachung des Hinweises auf die Patenterteilung: **17.12.2025**
(21) Anmeldenummer: 24158817.7
(22) Anmeldetag: 21.02.2024
(51) Int. Cl.: B60C 11/03, B60C 11/12

(54) **NUTZFAHRZEUGREIFEN**
COMMERCIAL VEHICLE TYRE
PNEU DE VÉHICULE UTILITAIRE

(30) Priorität: 21.03.2023 DE 102023202475
(43) Veröffentlichungstag der Anmeldung: 25.09.2024
(73) Patentinhaber: Continental Reifen Deutschland GmbH, 30175 Hannover (DE)
(72) Erfinder: Faturikova, Dagmar, 020 01 Púchov (SK); Daries, Ronald, Fort Mill, SC 29707 (US); Schlittenhard, Jan, 30175 Hannover (DE); Dettmer, Fabian, 30175 Hannover (DE); Lacko, Peter, 020 01 Púchov (SK); Magusin, Marek, 020 01 Púchov (SK); Vojtus, Michal, 020 01 Púchov (SK)
(74) Vertreter: Continental Corporation

(56) Entgegenhaltungen:
- EP-A2- 0 333 397
- CN-A- 101 524 950
- CN-A- 103 350 617
- JP-A- 2013 147 171
- JP-A- H08 192 607
- JP-A- S63 291 705
- US-A- 4 230 512
- US-A- 4 345 632
- US-A1- 2011 108 176
- US-A1- 2013 180 638
- US-A1- 2018 339 557

## Beschreibung

Die Erfindung betrifft einen Nutzfahrzeugreifen mit einem Laufstreifen mit zumindest einer an jeder Seite von einer Umfangsrille begrenzten, mittleren Profilblockreihe mit Profilblöcken, welche durch in die Umfangsrillen einmündende Querrillen mit einer Breite von 4,0 mm bis 8,0 mm voneinander getrennt sind und an den Umfangsrillen je eine in Draufsicht zick-zack-förmig verlaufende Blockkante aufweisen, wobei sich die Blockkante aus gerade verlaufenden, miteinander jeweils einen Winkel von 120° bis 170° einschließenden Kantenabschnitten, welche endseitige Kantenabschnitte und zumindest ein zwischen diesen verlaufender, weiterer Kantenabschnitt sind, zusammensetzt und am gegenseitigen Anschluss der Kantenabschnitte eine blockinnenseitige Knickstelle oder eine blockaußenseitige Knickstelle aufweist, wobei die Profilblöcke mit in die Umfangsrillen einmündenden, parallel zueinander sowie zwischen Knickstellen der Blockkanten verlaufenden Einschnitten mit einer Breite von 0,4 mm bis 1,8 mm und einer maximalen Tiefe von 70% bis 100% versehen sind.

Ein derartiger Nutzfahrzeugreifen ist beispielsweise aus der US 2013/0180638 A1 bekannt. Bei einem Ausführungsbeispiel weist der Nutzfahrzeugreifen einen Laufstreifen mit einer im Bereich der Reifenäquatorialebene in Draufsicht zick-zack-förmig verlaufenden, mittleren Umfangsrille und mit zwei in Draufsicht zick-zack-förmig verlaufenden, schulterseitigen Umfangsrillen auf. Die Umfangsrillen begrenzen zwei mittlere Profilblockreihen, welche durch in die Umfangsrillen einmündende Querrillen in Profilblöcke, welche eine relativ große Umfangerstreckung aufweisen, strukturiert sind. Die Profilblöcke weisen an den Umfangsrillen in Draufsicht zick-zack-förmig verlaufende Blockkanten mit vier Kantenabschnitten auf, wobei sowohl die Einschnitte als auch die Querrillen jeweils zwischen blockinnenseitigen Knickstellen der Blockkanten verlaufen. Dieser Nutzfahrzeugreifen soll gute Traktionseigenschaften und ein gleichmäßiges Abriebverhalten aufweisen.

Bekannter Weise ist es für die Traktionseigenschaften und die Winterfahreigenschaften eines Nutzfahrzeugreifens von Vorteil, wenn sich in den mittleren Profilblöcken des Laufstreifens zwischen den Querrillen jeweils mehrere durchquerende, möglichst lange Einschnitte befinden. Bei Profilblöcken mit zick-zack-förmig verlaufenden Blockkanten sind diese Einschnitte üblicherweise ungleich lang. Vor allem die kürzeren Einschnitte neigen dabei zu Einrissen am Einschnittgrund, wobei die Ursache die am Einschnittgrund der kürzeren Einschnitte verstärkte "Stressbelastung" sein dürfte. In der Folge ist die Dauerhaltbarkeit des Reifens beeinträchtigt.

Der Erfindung liegt daher die Aufgabe zugrunde, bei einem Nutzfahrzeugreifen der eingangs genannten Art zwischen den Querrillen mehrere Einschnitte derart anordnen zu können, dass gute Traktionseigenschaften und gute Winterfahreigenschaften sichergestellt sind, wobei die Einschnitte nicht zum Entstehen von Einrissen am Einschnittgrund neigen sollen, um die Dauerhaltbarkeit des Reifens zu verbessern.

Gelöst wird die gestellte Aufgabe erfindungsgemäß dadurch, dass die beiden Blockkanten jeweils aus insgesamt fünf oder sieben Kantenabschnitten zusammensetzt sind, wobei die Kantenabschnitte der Blockkanten bei jedem Profilblock parallel zueinander verlaufen, wobei die endseitigen Kantenabschnitte zur Umfangsrichtung unter übereinstimmenden ersten Winkeln von 2° bis 15° und jeder weitere Kantenabschnitt zur Umfangsrichtung unter einem gegenüber dem ersten Winkel größeren Winkel verläuft und wobei die Einschnitte jeweils zwischen einer blockinnenseitigen Knickstelle der einen Blockkante und einer blockaußenseitigen Knickstelle der anderen Blockkante sowie zwischen sämtlichen Knickstellen verlaufen.

Die Profilblöcke weisen speziell zick-zack-förmig verlaufende Blockkanten auf. Die zumindest vier Einschnitte pro Profilblock weisen infolge ihrer speziellen Anordnung zwischen den Knickstellen der zick-zack-förmig verlaufenden Blockkanten gleich große Erstreckungslängen auf, sodass die Einschnitte im Bereich ihrer Einschnittgründe eine vergleichbar gute Rissbeständigkeit aufweisen und somit die Dauerhaltbarkeit des Reifens verbessert ist. Gleichzeitig sorgen die zick-zack-förmig verlaufenden Blockkanten in Kombination mit der erhöhten Anzahl von Einschnitten pro Profilblock für gute Traktionseigenschaften und gute Winterfahreigenschaften.

Gemäß einer bevorzugten Ausführung weist bei jedem Profilblock die eine Blockkante zur anderen Blockkante einen in Umfangsrichtung ermittelten Versatz auf. Die Einschnitte verlaufen daher zur axialen Richtung unter einem entsprechenden Winkel, wodurch, insbesondere beim Auftreten von in lateraler Richtung wirkenden Kräften, die Traktionseigenschaften weiter verbessert sind.

Ferner ist es bevorzugt, wenn die endseitigen Kantenabschnitte der Blockkanten, welche zu in Umfangsrichtung aufeinanderfolgenden Profilblöcken gehören, in Draufsicht betrachtet, miteinander fluchten. Dies sorgt bei den an die Querrillen angrenzenden Bereichen der Profilblöcke für eine ausgewogene Steifigkeit, welche für einen gleichmäßigen Abrieb von Vorteil ist.

Eine weitere bevorzugte Ausführung ist dadurch gekennzeichnet, dass die blockinnenseitigen Knickstellen der Blockkanten, in Draufsicht betrachtet, jeweils auf einer in Umfangsrichtung verlaufenden, ersten Hilfslinie und die blockaußenseitigen Knickstellen der Blockkanten auf einer in Umfangsrichtung verlaufenden, zur ersten Hilfslinie parallelen, zweiten Hilfslinie liegen. Dies trägt zu einer Reduktion der Stressbelastung im Bereich der Einschnittgründe bei.

Bevorzugter Weise beträgt der Winkel, unter welchem die weiteren Kantenabschnitte, die an die endseitigen Kantenabschnitte anschließen, zur Umfangsrichtung verlaufen, 20° bis 30°, insbesondere von 23° bis 27°. Solche weiteren Kantenabschnitte verbessern die Traktionseigenschaften in Umfangsrichtung.

Die zwei nachfolgenden, miteinander kombinierbaren, bevorzugten Ausführungen betreffen die relativen Längen der Kantenabschnitte der Blockkante und sorgen dafür, dass die durch die Einschnitte gebildeten Profilblocksegmente im Wesentlichen gleichlange Umfangslängen aufweisen, was zur einer Vergleichmäßigung der Profilsteifigkeit beiträgt und derart die Dauerhaltbarkeit des Reifens zusätzlich verbessert.

Gemäß einer ersten diesbezüglich vorteilhaften Ausführung weisen die endseitigen Kantenabschnitte jeweils eine in Umfangsrichtung projizierte Länge von 12% bis 22%, insbesondere von 14% bis 18%, der in Umfangsrichtung projizierten Länge der Blockkante auf.

Gemäß einer zweiten diesbezüglich vorteilhaften Ausführung weisen die weiteren Kantenabschnitte, welche an die endseitigen Kantenabschnitte anschließen, jeweils eine in die Umfangsrichtung projizierte Länge von 17% bis 25%, insbesondere von 19% bis 23%, der in Umfangsrichtung projizierten Länge der Blockkante auf.

Eine weitere bevorzugte Ausführung ist dadurch gekennzeichnet, dass die in Umfangsrichtung projizierte Länge der Blockkante 40,0 mm bis 70,0 mm beträgt bzw. dass die Blockkante eine in die Umfangsrichtung projizierte Länge von 40,0 mm bis 70,0 mm aufweist.

Gemäß einer weiteren bevorzugten Ausführung weisen die Profilblöcke jeweils eine in der Laufstreifenperipherie liegende Blockaußenfläche, an den angrenzenden Querrillen Blockflanken und zwischen den Blockflanken und der Blockaußenfläche verlaufende, gerundete Übergangsflächen auf, welche, im in Draufsicht senkrecht zur Rillenmittellinie der Querrille ausgerichteten Querschnitt betrachtet, tangential an die Blockflanke und tangential an die Blockaußenfläche anschließen. Die Übergangsflächen sind insbesondere für die Bremsperformance günstig.

Bevorzugter Weise betragen die ersten Winkel, unter welchen die endseitigen Kantenabschnitte zur Umfangsrichtung verlaufen, 5° bis 10°, insbesondere 6° bis 9°.

Eine weitere bevorzugte Ausführung ist dadurch gekennzeichnet, dass der Laufstreifen zumindest zwei, insbesondere zumindest drei, bevorzugt genau drei, einander benachbarte mittlere Profilblockreihen aufweist, wobei die Profilblöcke aus einander unmittelbar benachbarten mittleren Profilblockreihen - bezogen auf in axialer Richtung durch die Mittelpunkte der Blockaußenflächen der Profilblöcke verlaufende Hilfslinien - einen in Umfangsrichtung ermittelten Versatz von 20% bis 50%, insbesondere von 25% bis 45%, bevorzugt von zumindest 40%, einer arithmetisch gemittelten Länge aufweisen, welche aus den in Umfangsrichtung projizierten Längen der vier zu den jeweiligen Profilblöcken gehörenden Blockkanten errechnet ist. Dies trägt zu einer zusätzlichen Verbesserung der Traktionseigenschaften bei.

Eine erste vorteilhafte Weiterbildung der zuletzt genannten bevorzugten Ausführung ist dadurch gekennzeichnet, dass bei Profilblöcken, welche den Versatz zueinander aufweisen, die Blockkanten einander axial gegenüberliegende Umfangsabschnitte aufweisen, welche entlang des die Profilblöcke voneinander trennenden Umfangsabschnitts der Umfangsrille verlaufen, wobei im Bereich des Umfangsabschnitts jeder Blockkante die blockaußenseitige(n) Knickstelle(n) zu der in Umfangsrichtung nächstliegenden, blockinnenseitigen Knickstelle der jeweils anderen Blockkante einen in Umfangsrichtung ermittelten, Versatz von 0,5 mm bis 5,0 mm aufweist bzw. aufweisen, wobei der Versatz kleiner ist die in Umfangsrichtung projizierten Längen der Kantenabschnitte der Blockkanten. Dies trägt ebenfalls zu einer zusätzlichen Verbesserung der Traktionseigenschaften bei.

Eine zweite vorteilhafte Weiterbildung der zuletzt genannten bevorzugten Ausführung ist dadurch gekennzeichnet, dass die Profilblöcke aus einander benachbarten mittleren Profilblockreihen, in Draufsicht betrachtet, um 180° verdreht orientiert sind. Dies trägt ebenfalls zu einer Verbesserung der Traktionseigenschaften bei.

Eine weitere bevorzugte Ausführung ist dadurch gekennzeichnet, dass zu den mittleren Profilblockreihen zumindest eine halbmittige Profilblockreihe gehört, welche zu einer schulterseitige Profilrippe benachbart ist, wobei die schulterseitige Profilrippe an der angrenzenden Umfangsrille eine in Draufsicht zick-zack-förmig verlaufende Rippenkante mit Winkel von 130° bis 140° einschließenden Kantenabschnitten aufweist, wobei an am gegenseitigen Anschluss von zwei Kantenabschnitten vorliegenden, rippenaußenseitigen Knickstelle jeweils ein Einschnitt mit einer Breite von 0,4 mm bis 1,8 mm und einer maximalen Tiefe von 70% bis 100% der Profiltiefe in die Umfangsrille einmündet. Eine derartige Kombination ist im Hinblick auf die Traktionseigenschaften besonders vorteilhaft.

Eine weitere bevorzugte Ausführung ist dadurch gekennzeichnet, dass die Rippenkante Umfangsabschnitte aufweist, welche jeweils einer Blockkante eines halbmittigen Profilblocks der halbmittigen Profilblockreihe axial gegenüberliegen, wobei im Bereich jedes Umfangsabschnitts der Rippenkante die blockaußenseitigen Knickstellen der Blockkante zu der in Umfangsrichtung nächstliegenden, rippeninnenseitigen Knickstelle der Rippenkante einen in Umfangsrichtung ermittelten Versatz von 0,5 mm bis 5,0 mm aufweist, wobei der Versatz kleiner ist die in Umfangsrichtung projizierten Längen (der Kantenabschnitte der Blockkanten.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf einen Laufstreifen eines Nutzfahrzeugreifens mit einer Ausführungsvariante der Erfindung und
Fig. 2 eine vergrößerte Draufsicht im Bereich eines Profilblocks.

Gemäß der Erfindung ausgeführte Nutzfahrzeugreifen sind insbesondere Reifen für Busse oder Lastkraftwagen (LKW) sowie vorzugsweise Reifen in Radialbauart für Felgen mit einem Felgendurchmesser von 17,5, 19,5 oder 22,5 Zoll.

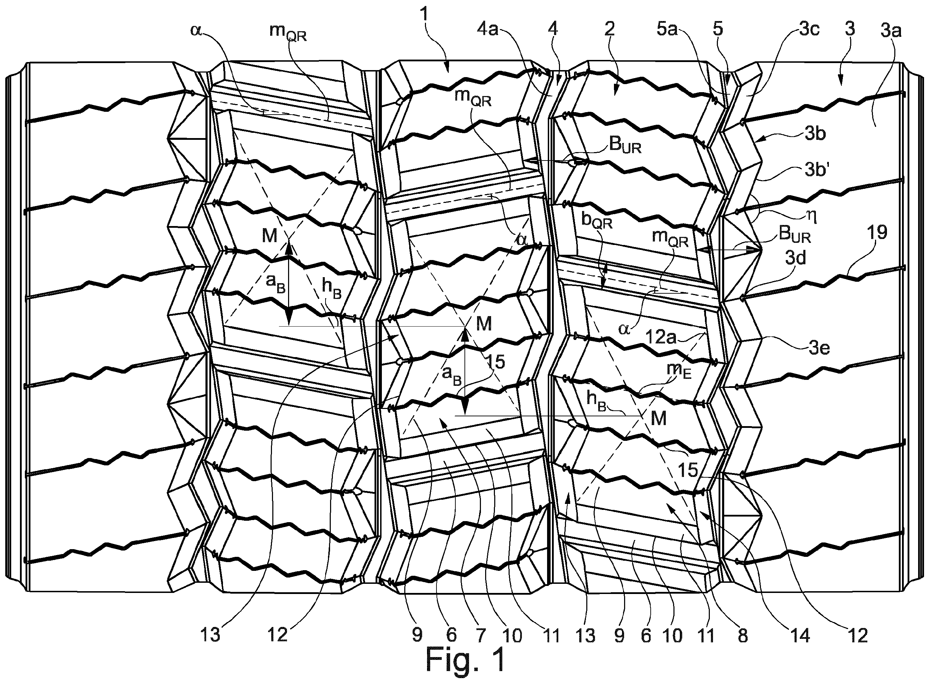

Fig. 1 zeigt eine Draufsicht auf einen Laufstreifen eines Nutzfahrzeugreifens. Der Laufstreifen weist eine zentrale Profilblockreihe 1, zwei halbmittige Profilblockreihen 2 und zwei schulterseitige Profilrippen 3 auf. Die zentrale Profilblockreihe 1 ist zu jeder halbmittigen Profilblockreihe 2 durch je eine mittlere Umfangsrille 4 und die halbmittigen Profilblockreihen 2 sind zur benachbarten, schulterseitigen Profilrippe 3 durch je eine schulterseitige Umfangsrille 5 getrennt.

Die Umfangsrillen 4, 5 sind in radialer Richtung auf die jeweils vorgesehene Profiltiefe ausgeführt, welche insbesondere 12,0 mm bis 26,0 mm beträgt, und weisen jeweils einen Rillengrund 4a (Umfangsillen 4), 5a (Umfangsrillen 5) auf.

Die zentrale Profilblockreihe 1 und jede halbmittige Profilblockreihe 2 ist durch eine Anzahl von in Umfangsrichtung aufeinanderfolgenden, in die jeweils angrenzenden Umfangsrillen 4, 5 einmündenden Querrillen 6 in zentrale Profilblöcke 7 (zentrale Profilblockreihe 1) bzw. in halbmittige Profilblöcke 8 (halbmittige Profilblockreihen 2) strukturiert. Die Querrillen 6 verlaufen, in Draufsicht betrachtet und bezogen auf in Erstreckungsrichtung ausgerichtete Rillenmittellinien m_{QR}, gerade, innerhalb jeder Profilblockreihe 1, 2 parallel zueinander sowie zur axialen Richtung jeweils unter einem Winkel α von 0° bis 20°, insbesondere von 5° bis 15°, wobei die Querrillen 6 der halbmittigen Profilblockreihen 2 bezüglich der axialen Richtung gegensinnig zu den Querrillen 6 der zentralen Profilblockreihe 1 orientiert sind. Die Querrillen 6 weisen in radialer Richtung eine maximale Tiefe (Tiefe an der tiefsten Stelle) von 75% bis 100%, insbesondere von bis zu 95%, der Profiltiefe und eine in Draufsicht senkrecht zur Rillenmittellinie m_{QR} ermittelte Breite b_{QR} von 4,0 mm bis 8,0 mm auf. Die Querrillen 6 der halbmittigen Profilblockreihen 2 sind zu den Querrillen 6 der zentralen Profilblockreihe 1 in Umfangsrichtung versetzt. Ferner sind die Querrillen 6 der einen halbmittigen Profilblockreihe 2 zu den Querrillen 6 der anderen halbmittigen Profilblockreihe 2 in Umfangsrichtung versetzt.

Die weitere Ausgestaltung der mittleren Profilblöcke 7 und der halbmittigen Profilblöcke 8 wird nachfolgend anhand von einzelnen Profilblöcken 7, 8 erläutert.

Der Profilblock 7, 8 weist eine in der Laufstreifenperipherie liegende Blockaußenfläche 9, an jeder angrenzenden Querrille 6 eine Blockflanke 10, zwei an je eine der Blockflanken 10 anschließende verrundete Übergangsflächen 11 und an jeder axial seitlich angrenzenden Umfangsrille 4 bzw. 5 eine in der Laufstreifenperipherie liegende Blockkante 12 auf. Der mittlere Profilblock 7 weist zu jeder mittleren Umfangsrillen 4 eine an die jeweilige Blockkante 12 anschließende Blockflanke 13 auf. Der halbmittige Profilblock 8 weist zur angrenzenden mittleren Umfangsrille 4 eine an die entsprechend Blockkante 12 anschließende Blockflanke 13 und zur angrenzenden schulterseitigen Umfangsrille 5 eine an die jeweilige Bockkante 12 anschließende Blockflanke 14 auf.

Die verrundeten Übergangsflächen 11 verlaufen zwischen der jeweiligen Blockflanke 10 und der Blockaußenfläche 9 und schließen, im in Draufsicht senkrecht zur Rillenmittellinie m_{QR} verlaufenden Querschnitt betrachtet, tangential an die Blockflanke 10 und tangential an die Blockaußenfläche 9 an. Die Blockflanken 10 verlaufen, im zuletzt erwähnten Querschnitt betrachtet, gerade sowie zur radialen Richtung unter einem Winkel von 0° bis 5°. Bei der Ermittlung der erwähnten Breite b_{QR} der Querrillen 6 bleiben die Übergangsflächen 11 unberücksichtigt, sodass die Ermittlung der Breite b_{QR} derart erfolgt, als wären die Blockflanken 10, im zuletzt erwähnten Querschnitt betrachtet, gerade bis zur Laufstreifenperipherie fortgeführt.

Wie noch genauer erläutert wird, ist der Profilblock 7, 8 von in die jeweils angrenzenden Umfangsrillen 4, 5 einmündenden Einschnitten 15 durchquert, welche die Blockkanten 12 abschnittsweise unterbrechen. Bei den nachfolgenden Erläuterungen zu den Blockkanten 12 bleiben die Einschnitte 15 unberücksichtigt, sodass die Ausgestaltung der Blockkanten 12 derart erläutert ist, als wären diese durch die Einschnitte 15 nicht unterbrochen und somit über die Einschnitte 15 hinweg fortgeführt.

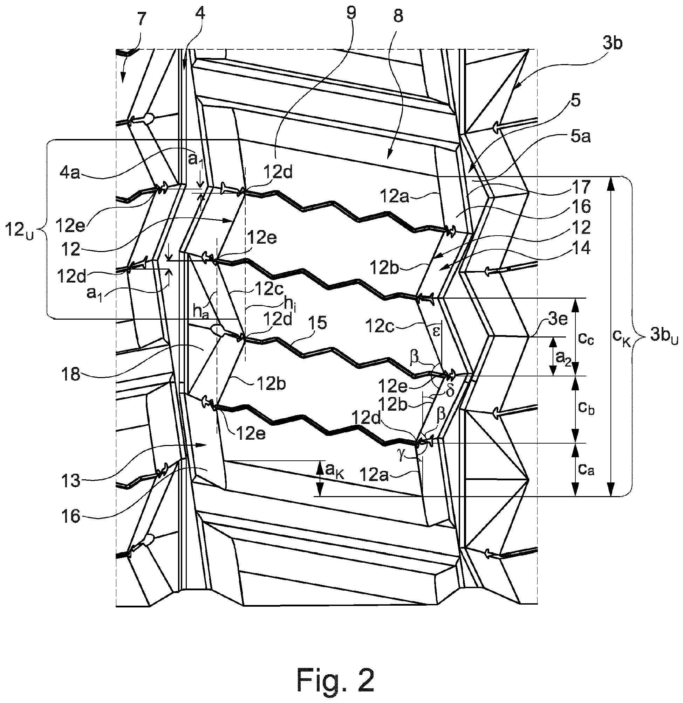

Jede Blockkante 12 endet an den Übergangsflächen 11 und verläuft, in Draufsicht betrachtet, unregelmäßig zick-zack-förmig, wobei die eine Blockkante 12 parallel zur anderen Blockkante 12 verläuft und - sofern der Winkel α der Querrillen 6 von 0° abweicht- zur dieser in Umfangsrichtung versetzt ist. Die eine Blockkante 12 ist daher, in Draufsicht betrachtet, durch Parallelverschieben auf die andere Blockkante 12 abbildbar, wobei die Blockkanten 12 unter einem in Umfangsrichtung ermittelten Versatz a_{K} (Fig. 2) zueinander verlaufen. Die Größe des Versatzes a_{K} resultiert aus den bereits erwähnten Winkel α (Fig. 1) der Querrillen 6.

Gemäß Fig. 2 weist jede Blockkante 12 eine in die Umfangsrichtung projizierte Länge c_{K} von 40,0 mm bis 70,0 mm auf. Die Blockkante 12 setzt sich, in Draufsicht betrachtet, aus zwei gerade und parallel zueinander verlaufenden, endseitigen Kantenabschnitten 12a, zwei auf die Kantenabschnitte 12a folgende, gerade und parallel zueinander verlaufende Kantenabschnitte 12b und einem gerade sowie zwischen den Kantenabschnitten 12b verlaufenden, mittleren Kantenabschnitt 12c zusammen, wobei die unmittelbar aufeinanderfolgenden Kantenabschnitte 12a, 12b, 12c miteinander Winkel β einschließen, welche voneinander abweichen können und jeweils 120° bis 170°, insbesondere von 130° bis 160°, betragen. Die Blockkante 12 weist an den gegenseitigen Anschlussstellen der Kantenabschnitte 12a, 12b, 12c eine blockinnenseitige Knickstelle 12d bzw. eine blockaußenseitige Knickstelle 12e auf. Bei den blockinnenseitigen Knickstellen 12d verläuft der Winkel β über die Seite der jeweilige Umfangsrille 4, 5 und an den blockaußenseitigen Knickstellen 12e verläuft der Winkel β über die Blockaußenfläche 9.

Die endseitigen Kantenabschnitte 12a weisen jeweils eine in Umfangsrichtung projizierte Länge cₐ von 12% bis 22%, insbesondere von 14% bis 18%, der Länge c_{K} der Blockkante 12 auf und verlaufen, in Draufsicht betrachtet, zur Umfangsrichtung jeweils unter einem Winkel γ von 2° bis 15°, insbesondere von 5° bis 10°, bevorzugt von 6° bis 9°. Die Kantenabschnitte 12b weisen jeweils eine in die Umfangsrichtung projizierte Länge c_{b} von 17% bis 25%, insbesondere von 19% bis 23%,der Länge c_{K} der Blockkante 12 auf und verlaufen, in Draufsicht betrachtet, zur Umfangsrichtung gegensinnig geneigt zu den endseitigen Kantenabschnitten 12a sowie zur Umfangsrichtung unter einem Winkel δ von 20° bis 30°, insbesondere von 23° bis 27°. Der mittlere Kantenabschnitt 12c weist eine in die Umfangsrichtung projizierte Länge c_{c} auf und verläuft, in Draufsicht betrachtet, gerade sowie zur Umfangsrichtung unter einem Winkel ε. Die Größe der Länge c_{c} ergibt sich aus den Größen der Längen cₐ, c_{b}. Die Größe des Winkels ε ergibt sich aus den Längen cₐ, c_{b}, c_{c} und den Winkel β, γ, δ.

Die Winkel β, γ, δ, ε sowie die Längen cₐ, c_{b}, c_{c} sind beim Ausführungsbeispiel derart aufeinander abgestimmt, dass die blockinnenseitigen Knickstellen 12d, in Draufsicht betrachtet, auf einer gerade in Umfangsrichtung verlaufenden, blockinnenseitigen Hilfslinie hᵢ und die blockaußenseitigen Knickstellen 12e, in Draufsicht betrachtet, auf einer gerade in Umfangsrichtung verlaufenden, blockaußenseitigen Hilfslinie hₐ liegen.

Die Blockflanke 14 setzt sich aus in Umfangsrichtung aneinander anschließenden, von je einem Kantenabschnitt 12a, 12b, 12c ausgehenden, Flankenabschnitten 16 zusammen, welche, im in Draufsicht senkrecht zum zugehörigen Kantenabschnitt 12a, 12b, 12c verlaufenden Querschnitt betrachtet, zur radialen Richtung unter einem konstanten Winkel von 10° bis 20°, insbesondere von 12° bis 18°, verlaufen. Zwischen dem radial inneren Ende jedes Flankenabschnitts 16 der Blockflanke 14 und dem Rillengrund 5a ist jeweils eine Übergangsrundung 17 ausgebildet.

Die Blockflanke 13 unterscheidet sich von der Blockflanke 14 dadurch, dass sie neben Flankenabschnitten 16 einen dreieckförmigen, radial innerer Flankenabschnitt 18 mit einer dem Rillengrund 4a zugewandten Dreieckbasis aufweist, welcher zwischen jenen Flankenabschnitten 15 ausgebildet ist, die von den an der blockinnenseitigen Knickstelle 12d aneinander anschließenden Kantenabschnitten 12b, 12c ausgehen.

Gemäß Fig. 1 ist der Profilblock 7, 8 mit den bereits erwähnten Einschnitten 15, welche eine Breite von 0,4 mm bis 1,8 mm, insbesondere von bis zu 1,2 mm, und eine in radialer Richtung ermittelte maximale Tiefe (Tiefe an der tiefsten Stelle) von 70% bis 100% der Profiltiefe aufweisen, versehen. Die Einschnitte 15 durchquerenden den Profilblock 7, 8, verlaufen, in Draufsicht betrachtet und bezogen auf in Erstreckungsrichtung ausgerichtete Einschnittmittellinien m_{E}, parallel zueinander, insbesondere gerade, sowie - wie Fig. 2 zeigt - jeweils zwischen der blockinnenseitigen Knickstelle 12d der einen Blockkante 12 und der zu dieser blockinnenseitigen Knickstelle 12d den Versatz a_{K} aufweisenden, blockaußenseitigen Knickstelle 12e der jeweils anderen Blockkante 12. Die Anzahl der Einschnitte 15 stimmt mit der Anzahl der Knickstellen 12d, 12e jeder Blockkante 12 überein.

Wie Fig. 1 ferner zeigt, ist die Ausgestaltung der Profilblöcke 7, 8 innerhalb der jeweiligen Profilblockreihe 1, 2 ferner derart, dass die endseitigen Kantenabschnitte 12a der Blockkanten 12, welche zu in Umfangsrichtung aufeinanderfolgenden Profilblöcken 7 bzw. 8 gehören, in Draufsicht betrachtet, miteinander fluchtend, also in geradliniger Verlängerung zueinander, verlaufen. Darüber hinaus sind die halbmittigen Profilblöcke 8 zu den zentralen Profilböcken 7, in Draufsicht betrachtet, um 180° verdreht orientiert. Außerdem sind die halbmittigen Profilblöcke 8 zu den zentralen Profilblöcken 7 - entsprechend dem bereits erwähnten Versatz zwischen den Querrillen 6 - ebenfalls in Umfangsrichtung zueinander versetzt. Die halbmittigen Profilblöcke 8 weisen zu einem der benachbarten zentralen Profilblöcke 7 - bezogen auf in axialer Richtung durch die Mittelpunkte M der Blockaußenflächen 9 verlaufende Hilfslinien h_{B} - einen in Umfangsrichtung ermittelten Versatz a_{B} von 20% bis 50%, insbesondere von 25% bis 45%, bevorzugt von zumindest 40%, jener arithmetisch gemittelten Länge auf, welche aus den Längen c_{K} (Fig. 2) der vier Blockkanten 12 der jeweiligen Profilblöcke 7, 8 errechnet ist. Der Mittelpunkt M ist der Schnittpunkt von zwei in Draufsicht gerade verlaufenen Linien, welche zwischen den bezüglich der Umfangsrichtung entgegengesetzt zueinander orientierten Enden der verschiedenen Blockkanten 12 des jeweiligen Profilblocks 7, 8 verlaufen.

Bevorzugter Weise ist der erwähnte Versatz a_{B} auf die Ausführung der Blockkanten 12 wie nachfolgend erläutert abgestimmt. Gemäß Fig. 2 weisen die Blockkanten 12 von Profilblöcken 7, 8, welche den Versatz a_{B} (Fig. 1) zueinander aufweisen, einander axial gegenüberliegende Umfangsabschnitte 12u auf, welche entlang des die Profilblöcke 7, 8 voneinander trennenden Umfangsabschnitts der jeweiligen mittleren Umfangsrille 4 verlaufen. Im Bereich des Umfangsabschnitts 12u jeder Blockkante 12 weist bzw. weisen die blockaußenseitige(n) Knickstelle(n) 12e zu der in Umfangsrichtung nächstliegenden, blockinnenseitigen Knickstelle 12d der jeweils anderen Blockkante 12 einen in Umfangsrichtung ermittelten Versatz a₁ von 0,5 mm bis 5,0 mm auf, wobei der Versatz a₁ kleiner ist als die kleinste der Längen cₐ, c_{b}, c_{c}.

Wie Fig. 1 zeigt, weisen die schulterseitigen Profilrippen 3 jeweils eine in der Laufstreifenperipherie liegende Rippenaußenfläche 3a, an der angrenzenden schulterseitigen Umfangsrille 5 eine in der Laufstreifenperipherie liegende Rippenkante 3b und eine an diese anschließende Rippenflanke 3c auf. Die Rippenkante 3b verläuft, in Draufsicht betrachtet, zick-zack-förmig, setzt sich aus gerade verlaufenden Kantenabschnitten 3b' zusammen, welche miteinander jeweils einen Winkel η von 130° bis 140° einschließen, und weist rippenaußenseitige Knickstellen 3d und rippeninnenseitige Knickstellen 3e auf. Die schulterseitigen Profilrippen 3 sind jeweils mit Einschnitten 19 mit eine Breite von 0,4 mm bis 1,8 mm, insbesondere von bis zu 1,2 mm, und einer in radialer Richtung ermittelten maximalen Tiefe (Tiefe an der tiefsten Stelle) von 70% bis 100% der Profiltiefe versehen, wobei die Einschnitte 19 jeweils an einer rippenaußenseitigen Knickstelle 3d in die jeweilige schulterseitige Umfangsrille 5 einmünden. Die Anzahl der Einschnitte 19 stimmt mit der Anzahl der rippenaußenseitigen Knickstellen 3d überein.

Gemäß Fig. 2 weist die Rippenkante 3b Umfangsabschnitte 3bu auf, welche sich jeweils entlang eines einen halbmittigen Profilblock 8 von der schulterseitigen Profilrippe 3 trennenden Umfangsabschnitts der schulterseitigen Umfangsrille 5 erstrecken und der entsprechenden Blockkante 12 axial gegenüberliegen. Im Bereich des Umfangsabschnitts 3bu weisen die blockaußenseitigen Knickstellen 12e der Blockkante 12 zu der in Umfangsrichtung nächstliegenden, rippeninnenseitigen Knickstelle 3e der Rippenkante 3b einen in Umfangsrichtung ermittelten Versatz a₂ von 0,5 mm bis 5,0 mm auf, wobei der Versatz a₂ kleiner ist als die kleinste der Längen cₐ, c_{b}, c_{c}.

Die Umfangsrillen 4, 5 weisen an der Laufstreifenperipherie eine in axialer Richtung ermittelte maximale Breite B_{UR} (Fig. 1, Breite an den breitesten Stellen) von 10,0 mm bis 25,0 mm, insbesondere von zumindest 15,0 mm, auf.

Die Erfindung ist auf das beschriebene Ausführungsbeispiel nicht beschränkt.

Der Laufstreifen weist zumindest eine beliebig positionierte mittlere Profilblockreihe mit entsprechenden Profilblöcken auf. Die mittlere Profilblockreihe kann daher eine im Bereich der Reifenäquatorialebene verlaufende zentrale Profilblockreihe oder eine seitlich der Reifenäquatorialebene verlaufende mittige bzw. halbmittige Profilblockreihe sein. Die schulterseitigen Profilrippen können in an sich bekannter Weise ausgeführt sein. Die verrundeten Übergangsflächen 11 sind optional, sodass die Blockflanken 10 an die Blockaußenfläche 9 anschließen und daher bis zur Laufstreifenperipherie reichen können.

### Bezugszeichenliste

- 1: zentrale Profilblockreihe
- 2: halbmittige Profilblockreihe
- 3: schulterseitige Profilrippe
- 3a: Rippenaußenfläche
- 3b: Rippenkante
- 3b_{U}: Umfangsabschnitt
- 3b': Kantenabschnitt
- 3c: Rippenflanke
- 3d: rippenaußenseitige Knickstelle
- 3e: rippeninnenseitige Knickstelle
- 4: mittlere Umfangsrille
- 4a: Rillengrund
- 5: schulterseitige Umfangsrille
- 5a: Rillengrund
- 6: Querrille
- 7: zentraler Profilblock
- 8: halbmittiger Profilblock
- 9: Blockaußenfläche
- 10: Blockflanke
- 11: Übergangsfläche
- 12: Blockkante
- 12a: endseitiger Kantenabschnitt
- 12b: Kantenabschnitt
- 12c: mittlerer Kantenabschnitt
- 12d: blockinnenseitige Knickstelle
- 12e: blockaußenseitige Knickstelle
- 12_{U}: Umfangsabschnitt
- 13: Blockflanke
- 14: Blockflanke
- 15: Einschnitt
- 16: Flankenabschnitt
- 17: Übergangsrundung
- 18: radial innerer Flankenabschnitt
- 19: Einschnitt
- a₁, a₂, a_{B}, a_{K}: Versatz
- b_{QR}: Breite
- B_{UR}: maximale Breite
- cₐ, c_{b}, c_{c}, c_{K}: Länge
- hₐ: blockaußenseitige Hilfslinie
- h_{b}: Hilfslinie
- hᵢ: blockinnenseitige Hilfslinie
- M: Mittelpunkt
- m_{E}: Einschnittmittellinie
- m_{QR}: Rillenmittellinie
- α, β, γ, δ, ε, η: Winkel

## Patentansprüche

1. Nutzfahrzeugreifen mit einem Laufstreifen mit zumindest einer an jeder Seite von einer Umfangsrille (4, 5) begrenzten, mittleren Profilblockreihe (1, 2) mit Profilblöcken (7, 8), welche durch in die Umfangsrillen (4, 5) einmündende Querrillen (6) mit einer Breite (b_{QR}) von 4,0 mm bis 8,0 mm voneinander getrennt sind und an den Umfangsrillen (4, 5) je eine in Draufsicht zick-zack-förmig verlaufende Blockkante (12) aufweisen, wobei sich die Blockkante (12) aus gerade verlaufenden, miteinander jeweils einen Winkel (β) von 120° bis 170° einschließenden Kantenabschnitten (12a, 12b, 12c), welche endseitige Kantenabschnitte (12a) und zumindest ein zwischen diesen verlaufender, weiterer Kantenabschnitt (12b, 12c) sind, zusammensetzt und am gegenseitigen Anschluss der Kantenabschnitte (12b, 12c) eine blockinnenseitige Knickstelle (12d) oder eine blockaußenseitige Knickstelle (12e) aufweist, wobei die Profilblöcke (7, 8) mit in die Umfangsrillen (4, 5) einmündenden, parallel zueinander sowie zwischen Knickstellen (12d, 12e) der Blockkanten (12) verlaufenden Einschnitten (15) mit einer Breite von 0,4 mm bis 1,8 mm und einer maximalen Tiefe von 70% bis 100% versehen sind,
**dadurch gekenzeichnet**,
dass die beiden Blockkanten (12) jeweils aus insgesamt fünf oder sieben Kantenabschnitten (12a, 12b, 12c) zusammensetzt sind, wobei die Kantenabschnitte (12a, 12b, 12c) der Blockkanten (12) bei jedem Profilblock (7, 8) parallel zueinander verlaufen, wobei die endseitigen Kantenabschnitte (12a) zur Umfangsrichtung unter übereinstimmenden ersten Winkeln (γ) von 2° bis 15° und jeder weitere Kantenabschnitt (12b, 12c) zur Umfangsrichtung unter einem gegenüber dem ersten Winkel (γ) größeren Winkel (δ, ε) verläuft und wobei die Einschnitte (15) jeweils zwischen einer blockinnenseitigen Knickstelle (12d) der einen Blockkante (12) und einer blockaußenseitigen Knickstelle (12e) der anderen Blockkante (12) sowie zwischen sämtlichen Knickstellen (12e, 12d) verlaufen.

2. Nutzfahrzeugreifen nach Anspruch 1, **dadurch gekennzeichnet, dass** bei jedem Profilblock (7, 8) die eine Blockkante (12) zur anderen Blockkante (12) einen in Umfangsrichtung ermittelten Versatz (a_{K}) aufweist.

3. Nutzfahrzeugreifen nach Anspruch 1 oder 2, **dadurch gekennzeichnet, dass** die endseitigen Kantenabschnitte (12a) der Blockkanten (12), welche zu in Umfangsrichtung aufeinanderfolgenden Profilblöcken (7, 8) gehören, in Draufsicht betrachtet, miteinander fluchten.

4. Nutzfahrzeugreifen nach einem der Ansprüche 1 bis 3, **dadurch gekennzeichnet, dass** die blockinnenseitigen Knickstellen (12d) der Blockkanten (12), in Draufsicht betrachtet, jeweils auf einer in Umfangsrichtung verlaufenden, ersten Hilfslinie (hᵢ) und die blockaußenseitigen Knickstellen (12e) der Blockkanten (12) auf einer in Umfangsrichtung verlaufenden, zur ersten Hilfslinie (hᵢ) parallelen, zweiten Hilfslinie (hₐ) liegen.

5. Nutzfahrzeugreifen nach einem der Ansprüche 1 bis 4, **dadurch gekennzeichnet, dass** der Winkel (δ), unter welchem die weiteren Kantenabschnitte (12b), die an die endseitigen Kantenabschnitte (12a) anschließen, zur Umfangsrichtung verlaufen, 20° bis 30°, insbesondere von 23° bis 27°, beträgt.

6. Nutzfahrzeugreifen nach einem der Ansprüche 1 bis 5, **dadurch gekennzeichnet, dass** die endseitigen Kantenabschnitte (12a) jeweils eine in Umfangsrichtung projizierte Länge (cₐ) von 12% bis 22%, insbesondere von 14% bis 18%, der in Umfangsrichtung projizierten Länge (c_{K}) der Blockkante (12) aufweisen.

7. Nutzfahrzeugreifen nach einem der Ansprüche 1 bis 6, **dadurch gekennzeichnet, dass** die weiteren Kantenabschnitte (12b), welche an die endseitigen Kantenabschnitte (12a) anschließen, jeweils eine in die Umfangsrichtung projizierte Länge (c_{b}) von 17% bis 25%, insbesondere von 19% bis 23%, der in Umfangsrichtung projizierten Länge (c_{K}) der Blockkante (12) aufweisen.

8. Nutzfahrzeugreifen nach einem der Ansprüche 1 bis 7, **dadurch gekennzeichnet, dass** die in Umfangsrichtung projizierte Länge (c_{K}) der Blockkante (12) 40,0 mm bis 70,0 mm beträgt bzw.
dass die Blockkante (12) eine in die Umfangsrichtung projizierte Länge (c_{K}) von 40,0 mm bis 70,0 mm aufweist.

9. Nutzfahrzeugreifen nach einem der Ansprüche 1 bis 8, **dadurch gekennzeichnet, dass** die Profilblöcke (7, 8) jeweils eine in der Laufstreifenperipherie liegende Blockaußenfläche (9), an den angrenzenden Querrillen (6) Blockflanken (10) und zwischen den Blockflanken (10) und der Blockaußenfläche (9) verlaufende, gerundete Übergangsflächen (11) aufweisen, welche, im in Draufsicht senkrecht zur Rillenmittellinie (m_{QR}) der Querrille (6) ausgerichteten Querschnitt betrachtet, tangential an die Blockflanke (10) und tangential an die Blockaußenfläche (9) anschließen.

10. Nutzfahrzeugreifen nach einem der Ansprüche 1 bis 9, **dadurch gekennzeichnet, dass** die ersten Winkel (γ), unter welchen die endseitigen Kantenabschnitte (12a) zur Umfangsrichtung verlaufen, 5° bis 10°, insbesondere 6° bis 9°, betragen.

11. Nutzfahrzeugreifen nach einem der Ansprüche 1 bis 10, **dadurch gekennzeichnet, dass** der Laufstreifen zumindest zwei, insbesondere zumindest drei, bevorzugt genau drei, einander benachbarte mittlere Profilblockreihen (1, 2) aufweist, wobei die Profilblöcke (7, 8) aus einander unmittelbar benachbarten mittleren Profilblockreihen (1, 2) - bezogen auf in axialer Richtung durch die Mittelpunkte (M) der Blockaußenflächen (9) der Profilblöcke (7, 8) verlaufende Hilfslinien (he) - einen in Umfangsrichtung ermittelten Versatz (a_{B}) von 20% bis 50%, insbesondere von 25% bis 45%, bevorzugt von zumindest 40%, einer arithmetisch gemittelten Länge aufweisen, welche aus den in Umfangsrichtung projizierten Längen (c_{K}) der vier zu den jeweiligen Profilblöcken (7, 8) gehörenden Blockkanten (12) errechnet ist.

12. Nutzfahrzeugreifen nach Anspruch 11, **dadurch gekennzeichnet, dass** bei Profilblöcken (7, 8), welche den Versatz (a_{B}) zueinander aufweisen, die Blockkanten (12) einander axial gegenüberliegende Umfangsabschnitte (12u) aufweisen, welche entlang des die Profilblöcke (7, 8) voneinander trennenden Umfangsabschnitts der Umfangsrille (4) verlaufen, wobei im Bereich des Umfangsabschnitts (12u) jeder Blockkante (12) die blockaußenseitige(n) Knickstelle(n) (12e) zu der in Umfangsrichtung nächstliegenden, blockinnenseitigen Knickstelle (12d) der jeweils anderen Blockkante (12) einen in Umfangsrichtung ermittelten Versatz (a₁) von 0,5 mm bis 5,0 mm aufweist bzw. aufweisen, wobei der Versatz (a₁) kleiner ist die in Umfangsrichtung projizierten Längen (cₐ, c_{b}, c_{c}) der Kantenabschnitte (12a, 12b, 12c) der Blockkanten (12).

13. Nutzfahrzeugreifen nach Anspruch 11 oder 12, **dadurch gekennzeichnet, dass** die Profilblöcke (7, 8) aus einander benachbarten mittleren Profilblockreihen (1, 2), in Draufsicht betrachtet, um 180° verdreht orientiert sind.

14. Nutzfahrzeugreifen nach einem der Ansprüche 1 bis 13, **dadurch gekennzeichnet, dass** zu den mittleren Profilblockreihen (1, 2) zumindest eine halbmittige Profilblockreihe (2) gehört, welche zu einer schulterseitige Profilrippe (3) benachbart ist, wobei die schulterseitige Profilrippe (3) an der angrenzenden Umfangsrille (5) eine in Draufsicht zick-zack-förmig verlaufende Rippenkante (3b) mit Winkel (η) von 130° bis 140° einschließenden Kantenabschnitten (3b') aufweist, wobei an am gegenseitigen Anschluss von zwei Kantenabschnitten (3b') vorliegenden, rippenaußenseitigen Knickstelle (3d) jeweils ein Einschnitt (20) mit einer Breite von 0,4 mm bis 1,8 mm und einer maximalen Tiefe von 70% bis 100% der Profiltiefe in die Umfangsrille (5) einmündet.

15. Nutzfahrzeugreifen nach Anspruch 14, **dadurch gekennzeichnet, dass** die Rippenkante (3b) Umfangsabschnitte (3u) aufweist, welche jeweils einer Blockkante (12) eines halbmittigen Profilblocks (8) der halbmittigen Profilblockreihe (2) axial gegenüberliegen, wobei im Bereich jedes Umfangsabschnitts (3bu) der Rippenkante (3b) die blockaußenseitigen Knickstellen (12e) der Blockkante (12) zu der in Umfangsrichtung nächstliegenden, rippeninnenseitigen Knickstelle (3e) der Rippenkante (3b) einen in Umfangsrichtung ermittelten Versatz (a₂) von 0,5 mm bis 5,0 mm aufweist, wobei der Versatz (a₂) kleiner ist die in Umfangsrichtung projizierten Längen (cₐ, c_{b}, c_{c}) der Kantenabschnitte (12a, 12b, 12c) der Blockkanten (12).

## Claims

1. Commercial vehicle tyre with a tread strip with at least one central row of tread blocks (1, 2) with tread blocks (7, 8), which are delimited on each side by a circumferential groove (4, 5) and which are separated from each other by transverse grooves (6) opening into the circumferential grooves (4, 5) with a width (b_{QR}) from 4.0 mm to 8.0 mm, and each have, on the circumferential grooves (4, 5), an edge (12) running in a zigzag in plan view, wherein the block edge (12) comprises edge portions (12a, 12b, 12c) which run in a straight line, each encloses an angle (β) of 120° to 170°, and are end-side edge portions (12a) and at least one further edge portion (12b, 12c) which runs between them, and the said block edge has, at the mutual connection of the edge portions (12b, 12c), a kink (12d) on the block inner side or a kink (12e) on the block outer side, wherein the profile blocks (7, 8) are provided with sipes (15) which open into the circumferential grooves (4, 5), run parallel to each other and between kinks (12d, 12e) of the block edges (12), and have a width of 0.4 mm to 1.8 mm and a maximum depth of 70% to 100%,
**characterized**
**in that** the block edges (12) each comprise five or seven edge portions (12a, 12b, 12c), wherein the edge portions (12a, 12b, 12c) of the block edges (12) run parallel to one another in each profile block (7, 8), wherein the end-side edge portions (12a) run, in relation to the circumferential direction, at corresponding first angles (γ) of 2° to 15°, and each further edge portion (12b, 12c) runs, in relation to the circumferential direction, at an angle (δ, ε) greater than the first angle (γ), and wherein the sipes (15) each run between a kink (12d) on the block inner side of the one block edge (12) and a kink (12e) on the block outer side of the other block edge (12) and also between all kinks (12e, 12d).

2. Commercial vehicle tyre according to Claim 1, **characterized in that**, in the case of each profile block (7, 8), the one block edge (12) has an offset (a_{K}) determined in the circumferential direction with respect to the other block edge (12).

3. Commercial vehicle tyre according to Claim 1 or 2, **characterized in that** the end-side edge portions (12a) of the block edges (12) which belong to consecutive profile blocks (7, 8) in the circumferential direction are aligned with each other, as viewed in plan view.

4. Commercial vehicle tyre according to one of Claims 1 to 3, **characterized in that** the kinks (12d) on the block inner side of the block edges (12) each lie, as viewed in plan view, on a first auxiliary line (hᵢ) running in the circumferential direction, and the kinks (12e) on the block outer side of the block edges (12) lie on a second auxiliary line (hₐ) running in the circumferential direction and parallel to the first auxiliary line (hi).

5. Commercial vehicle tyre according to one of Claims 1 to 4, **characterized in that** the angle (δ), at which the further edge portions (12b), which adjoin the end-side edge portions (12a), run with respect to the circumferential direction, is 20° to 30°, in particular from 23° to 27°.

6. Commercial vehicle tyre according to one of Claims 1 to 5, **characterized in that** the end-side edge portions (12a) each have a length (cₐ), projected in the circumferential direction, of from 12% to 22%, in particular from 14% to 18%, of the length (c_{K}) of the block edge (12).

7. Commercial vehicle tyre according to one of Claims 1 to 6, **characterized in that** the further edge portions (12b), which adjoin the end-side edge portions (12a), each have a length (c_{b}), projected in the circumferential direction, from 17% to 25%, in particular from 19% to 23%, of the length (c_{K}), projected in the circumferential direction, of the block edge (12).

8. Commercial vehicle tyre according to one of Claims 1 to 7, **characterized in that** the length (c_{K}), projected in the circumferential direction, of the block edge (12) is from 40.0 mm to 70.0 mm, and/or
**in that** the block edge (12) has a length (c_{K}), projected in the circumferential direction, from 40.0 mm to 70.0 mm.

9. Commercial vehicle tyre according to one of Claims 1 to 8, **characterized in that** the profile blocks (7, 8) each have a block outer surface (9) lying in the tread strip periphery, block flanks (10) on the adjacent transverse grooves (6), and rounded transition surfaces (11) running between the block flanks (10) and the block outer surface (9), which as viewed in plan view perpendicularly with respect to the groove centre line (m_{QR}) of the transverse groove (6), adjoin the block flank (10) tangentially and the block outer surface (9) tangentially.

10. Commercial vehicle tyre according to one of Claims 1 to 9, **characterized in that** the first angles (γ), at which the end-side edge sections (12a) run with respect to the circumferential direction, are 5° to 10°, in particular 6° to 9°.

11. Commercial vehicle tyre according to one of Claims 1 to 10, **characterized in that** the tread strip has at least two, in particular at least three, preferably exactly three, adjacent middle profile block rows (1, 2), wherein the profile blocks (7, 8) comprising directly adjacent middle profile block rows (1, 2) have - in relation to auxiliary lines (h_{B}) running in the axial direction through the centre points (M) of the outer block surfaces (9) of the profile blocks (7, 8) - an offset (a_{B}) determined in the circumferential direction of 20% to 50%, in particular of 25% to 45%, preferably of at least 40%, of an arithmetically averaged length which is calculated from the lengths (c_{K}), projected in the circumferential direction, of the four block edges (12) belonging to the respective profile blocks (7, 8).

12. Commercial vehicle tyre according to Claim 11, **characterized in that**, in the case of profile blocks (7, 8), which have the offset (a_{B}) with respect to each other, the block edges (12) have axially opposite circumferential portions (12u) which run along the circumferential portion of the circumferential groove (4) separating the profile blocks (7, 8), wherein, in the region of the circumferential portion (12u) of each block edge (12), the kink/kinks (12e) on the block outer side has or have an offset (a₁), determined in the circumferential direction, of 0.5 mm to 5.0 mm with respect to the nearest (in the circumferential direction) kink (12d) on the block inner side of the respective other block edge (12), wherein the offset (a₁) is smaller than the lengths (cₐ, c_{b}, c_{c}), projected in the circumferential direction, of the edge portions (12a, 12b, 12c) of the block edges (12).

13. Commercial vehicle tyre according to Claim 11 or 12, **characterized in that** the profile blocks (7, 8) from adjacent middle profile block rows (1, 2) are oriented rotated by 180°, as viewed in plan view.

14. Commercial vehicle tyre according to one of Claims 1 to 13, **characterized in that** at least one semi-central profile block row (2) belongs to the middle profile block rows (1, 2), which semi-central block row is adjacent to a shoulder-side profile rib (3), wherein the shoulder-side profile rib (3) has, at the adjacent circumferential groove (5), edge portions (3b') enclosing a rib edge (3b), which runs in plan view in a zigzag-shaped manner, at an angle (η) of 130° to 140°, wherein in each case one sipe (20) with a width of 0.4 mm to 1.8 mm and a maximum depth of 70% to 100% of the profile depth opens into the circumferential groove (5) at the kink (3d) on the rib outer side present at the mutual connection of two edge portions (3b').

15. Commercial vehicle tyre according to Claim 14, **characterized in that** the rib edge (3b) has circumferential portions (3u) which each lie axially opposite a block edge (12) of a semi-central profile block (8) of the semi-central profile block row (2), wherein, in the region of each circumferential portion (3b_{U}) of the rib edge (3b), the kinks (12e) on the block outer side of the block edge (12) have an offset (a₂) of 0.5 mm to 5.0 mm with respect to the rib-inside kink (3e) on the rib inner side of the rib edge (3b) which is nearest in the circumferential direction, wherein the offset (a₂) is smaller than the lengths (cₐ, c_{b}, c_{c}), projected in the circumferential direction, of the edge portions (12a, 12b, 12c) of the block edges (12).

## Revendications

1. Pneu de véhicule utilitaire avec une bande de roulement avec au moins une rangée centrale de blocs de profil (1, 2) délimitée de chaque côté par une rainure circonférentielle (4, 5) avec des blocs de profil (7, 8) qui sont séparés les uns des autres par des rainures transversales (6) d'une largeur (b_{QR}) de 4,0 mm à 8,0 mm débouchant dans les rainures circonférentielles (4, 5), et qui présentent sur les rainures circonférentielles (4, 5), ç chaque fois un bord de bloc (12) qui s'étend en forme de zigzag en vue de dessus, le bord de bloc (12) se composant de sections de bord (12a, 12b, 12c) s'étendant de manière rectiligne, formant respectivement entre elles un angle (β) de 120° à 170°, qui sont des sections de bord d'extrémité (12a) et au moins une autre section de bord (12b, 12c) s'étendant entre celles-ci, et présentant, au niveau du raccordement mutuel des sections de bord (12b, 12c), un point d'inflexion (12d) du côté intérieur du bloc ou un point d'inflexion (12e) du côté extérieur du bloc, les blocs de profil (7, 8) étant munis d'incisions (15) d'une largeur de 0,4 mm à 1,8 mm et d'une profondeur maximale de 70 % à 100 %, débouchant dans les rainures circonférentielles (4, 5), s'étendant parallèlement entre elles ainsi qu'entre les points d'inflexion (12d, 12e) des bords de bloc (12), **caractérisé**
**en ce que** les deux bords de bloc (12) sont chacune composés d'un total de cinq ou sept sections de bord (12a, 12b, 12c), les sections de bord (12a, 12b, 12c) des bords de bloc (12) s'étendent parallèlement les unes aux autres pour chaque bloc de profil (7, 8), les sections de bord d'extrémité (12a) s'étendant par rapport à la direction circonférentielle selon des premiers angles (γ) identiques de 2° à 15° et chaque section de bord supplémentaire (12b, 12c) s'étendant par rapport à la direction circonférentielle selon un angle (δ, ε) plus grand que le premier angle (γ), et les incisions (15) s'étendant respectivement entre un point d'inflexion (12d) du côté intérieur du bloc d'un bord de bloc (12) et un point d'inflexion (12e) du côté extérieur du bloc de l'autre bord de bloc (12), ainsi qu'entre tous les points d'inflexion (12e, 12d).

2. Pneu de véhicule utilitaire selon la revendication 1, **caractérisé en ce que**, pour chaque bloc de profil (7, 8), un bord de bloc (12) présente par rapport à l'autre bord de bloc (12) un décalage (a_{K}) déterminé dans la direction circonférentielle.

3. Pneu de véhicule utilitaire selon la revendication 1 ou 2, **caractérisé en ce que** les sections de bord d'extrémité (12a) des bords de bloc (12) qui appartiennent à des blocs de profil (7, 8) se succédant dans la direction circonférentielle sont alignées les unes avec les autres, considérées en vue de dessus.

4. Pneu de véhicule utilitaire selon l'une quelconque des revendications 1 à 3, **caractérisé en ce que** les points d'inflexion (12d) du côté intérieur du bloc des bords de bloc (12), considérés en vue de dessus se situent respectivement sur une première ligne auxiliaire (hᵢ) s'étendant dans la direction circonférentielle et les points d'inflexion (12e) du côté extérieur du bloc des bords de bloc (12) se situent sur une deuxième ligne auxiliaire (hₐ) s'étendant dans la direction circonférentielle, parallèle à la première ligne auxiliaire (hᵢ).

5. Pneu de véhicule utilitaire selon l'une quelconque des revendications 1 à 4, **caractérisé en ce que** l'angle (δ) selon lequel les autres sections de bord (12b), qui se raccordent aux sections de bord d'extrémité (12a), s'étendent par rapport à la direction circonférentielle, est de 20° à 30°, notamment de 23° à 27°.

6. Pneu de véhicule utilitaire selon l'une quelconque des revendications 1 à 5, **caractérisé en ce que** les sections de bord d'extrémité (12a) présentent chacune une longueur (cₐ) projetée dans la direction circonférentielle de 12 % à 22 %, notamment de 14 % à 18 %, de la longueur (c_{K}) projetée dans la direction circonférentielle du bord de bloc (12).

7. Pneu de véhicule utilitaire selon l'une quelconque des revendications 1 à 6, **caractérisé en ce que** les autres sections de bord (12b) qui sont raccordées aux sections de bord d'extrémité (12a) présentent chacune une longueur (c_{b}) projetée dans la direction circonférentielle de 17 % à 25 %, notamment de 19 % à 23 % de la longueur (c_{K}) projetée dans la direction circonférentielle du bloc de bord (12).

8. Pneu de véhicule utilitaire selon l'une quelconque des revendications 1 à 7, **caractérisé en ce que** la longueur (c_{K}) projetée dans la direction circonférentielle du bord de bloc (12) est de 40,0 mm à 70,0 mm, ou
**en ce que** le bord de bloc (12) présente une longueur (c_{K}) projetée dans la direction circonférentielle de 40,0 mm à 70,0 mm.

9. Pneu de véhicule utilitaire selon l'une quelconque des revendications 1 à 8, **caractérisé en ce que** les blocs de profil (7, 8) présentent chacun une surface extérieure de bloc (9) située dans la périphérie de la bande de roulement, des flancs de bloc (10) au niveau des rainures transversales adjacentes (6), et des surfaces de transition arrondies (11) s'étendant entre les flancs de bloc (10) et la surface extérieure de bloc (9), qui, considérées dans la coupe transversale orientée perpendiculairement à la ligne centrale de rainure (m_{QR}) de la rainure transversale (6) en vue de dessus, se raccordent tangentiellement au flanc de bloc (10) et tangentiellement à la surface extérieure de bloc (9).

10. Pneu de véhicule utilitaire selon l'une quelconque des revendications 1 à 9, **caractérisé en ce que** les premiers angles (γ) selon lesquels les sections de bord d'extrémité (12a) s'étendent par rapport à la direction circonférentielle sont de 5° à 10°, notamment de 6° à 9°

11. Pneu de véhicule utilitaire selon l'une des revendications 1 à 10, **caractérisé en ce que** la bande de roulement présente au moins deux, notamment au moins trois, de préférence exactement trois rangées centrales de blocs de profil (1, 2) voisines les unes des autres, les blocs de profil (7, 8) de rangées centrales de blocs de profil (1, 2) immédiatement voisines les unes des autres présentant - par rapport à des lignes auxiliaires (h_{B}) s'étendant dans la direction axiale à travers les centres (M) des surfaces extérieures de bloc (9) des blocs de profil (7, 8) - un décalage (a_{B}) déterminé dans la direction circonférentielle de 20 % à 50 %, notamment de 25 % à 45 %, de préférence d'au moins 40 %, d'une longueur moyenne arithmétique calculée à partir des longueurs (c_{K}) projetées dans la direction circonférentielle des quatre bords de bloc (12) appartenant aux blocs de profil respectifs (7, 8).

12. Pneu de véhicule utilitaire selon la revendication 11, **caractérisé en ce que**, pour les blocs de profil (7, 8) qui présentent le décalage (a_{B}) les uns par rapport aux autres, les bords de bloc (12) présentent des sections circonférentielles (12u) axialement opposées les unes aux autres qui s'étendent le long de la section circonférentielle (4) qui sépare les blocs de profil (7, 8) les uns des autres, le ou les points d'inflexion (12e) du côté extérieur du bloc présentant dans la zone de la section circonférentielle (12u) de chaque bord de bloc (12) un décalage (a₁) de 0,5 mm à 5,0 mm, déterminé dans la direction circonférentielle, par rapport au point d'inflexion (12d) du côté intérieur du bloc le plus proche dans la direction circonférentielle de l'autre bord de bloc respectif (12), le décalage (a₁) étant inférieur aux longueurs (cₐ, c_{b}, c_{c}) projetées dans la direction circonférentielle des sections de bord (12a, 12b, 12c) des bords de bloc (12).

13. Pneu de véhicule utilitaire selon la revendication 11 ou 12, **caractérisé en ce que** les blocs de profil (7, 8) de rangées centrales de blocs de profil (1, 2) voisines les unes des autres, considérées en vue de dessus, sont orientés avec une rotation de 180°.

14. Pneu de véhicule utilitaire selon l'une quelconque des revendications 1 à 13, **caractérisé en ce que** les rangées centrales de blocs de profil (1, 2) comprennent au moins une rangée de blocs de profil semi-centrale (2) qui est voisine d'une nervure de profil côté épaulement (3), la nervure de profil côté épaulement (3) présentant, au niveau de la rainure circonférentielle adjacente (5), un bord de nervure (3b) s'étendant en forme de zigzag en vue de dessus, avec des sections de bord (3b') formant un angle (η) de 130° à 140° ; au niveau d'un point d'inflexion (3d) du côté extérieur de la nervure présent au niveau du raccordement mutuel de deux sections de bord (3b'), une incision (20) d'une largeur de 0,4 mm à 1,8 mm et d'une profondeur maximale de 70 % à 100 % de la profondeur de profil débouchant dans la rainure circonférentielle (5).

15. Pneu de véhicule utilitaire selon la revendication 14, **caractérisé en ce que** le bord de nervure (3b) présente des sections circonférentielles (3u) qui sont chacune axialement opposées à un bord de bloc (12) d'un bloc de profil semi-central (8) de la rangée de blocs de profil semi-centrale (2) ; dans la zone de chaque section circonférentielle (3bu) du bord de nervure (3b), les points d'inflexion (12e) du côté extérieur du bloc du bord (12) présentant par rapport au point d'inflexion (3e) du côté intérieur de la nervure, le plus proche dans la direction circonférentielle, du bord de nervure (3b) un décalage (a₂) déterminé dans la direction circonférentielle de 0,5 mm à 5,0 mm, le décalage (a₂) étant inférieur aux longueurs (cₐ, c_{b}, c_{c}) projetées dans la direction circonférentielle des sections de bord (12a, 12b, 12c) des bords de bloc (12).
